# EUROPÄISCHE PATENTSCHRIFT

(11) **EP 0 441 150 B1**
(45) Veröffentlichungstag und Bekanntmachung des Hinweises auf die Patenterteilung: **04.06.1997**
(21) Anmeldenummer: 91100627.8
(22) Anmeldetag: 19.01.1991
(51) Int. Cl.: B29D 30/06

(54) **Balglose Reifenheizpresse**
Bladderless vulcanisingpress for tyres
Presse de vulcanisation pour pneus sans sac gonflable

(30) Priorität: 05.02.1990 DE 4003413
(43) Veröffentlichungstag der Anmeldung: 14.08.1991
(73) Patentinhaber: Krupp Kunststofftechnik GmbH, 45143 Essen (DE)
(72) Erfinder: Drewel, Günter, W-2105 Seevetal (DE); Enoch, Horst, Dipl.-Ing., W-2100 Hamburg (DE); Grotkasten, Klaus, Dipl.-Ing., W-2100 Hamburg 90 (DE)

(56) Entgegenhaltungen:
- EP-A- 0 182 026
- DE-A- 3 242 241
- DE-B- 1 124 674
- FR-A- 2 142 032

## Beschreibung

Die Erfindung betrifft eine balglose Reifenheizpresse mit einem oberen und einem unteren äußeren Wulstformwerkzeug und den jeweiligen Reifenwulst in der Heizposition gegen das entsprechende Wulstformwerkzeug pressenden Gegenwerkzeugen, die als obere bzw. untere Anpreßscheibe ausgebildet sind, die unabhängig voneinander axial bewegbar sind, einen Außendurchmesser aufweisen, der größer ist als der Innendurchmesser des Reifenwulstes, des Reifenrohlings und jeweils eine dem zugeordneten Wulstformwerkzeug zugewandte, ringförmige Anpreßfläche aufweisen.

Bei bekannten balglosen Reifenheizpressen (vgl. z. B. EP-OS 0 022 350) werden die Gegenwerkzeuge durch eine Vielzahl von gleichmäßig am Umfang verteilten Greifarmen gebildet, die in senkrechter und radialer Richtung steuerbar sind. Nachteilig bei diesen bekannten Reifenheizpressen ist, daß die Anpreßfläche der Greifarme wegen ihrer segmentartigen Ausbildung am Umfang unterbrochen ist. Ein weiterer Nachteil ergibt sich dadurch, daß die Vielzahl von notwendigen Gelenken und Steuerelementen mit entsprechend genauen Steuerflächen auf Dauer durch das Heizmedium angegriffen wird und es zu dadurch bedingten Produktionsausfällen kommt.

Der Erfindung liegt die Aufgabe zugrunde, eine Reifenheizpresse der eingangs genannten Art so zu gestalten, daß die Angriffsmöglichkeiten des Heizmediums gegenüber den Pressenwerkzeugen deutlich gemindert sind und außerdem eine bessere Zentrierung des Reifenwulstes sowohl bezüglich der Anpreßscheibe als auch bezüglich des Wulstformwerkzeuges erfolgt. Diese Aufgabe wird dadurch gelöst, daß die Anpreßscheiben zur Anlage in einer Ausnehmung des entsprechenden äußeren Wulstformwerkzeugs einen die Anpreßfläche begrenzenden - in der Draufsicht gesehen - kreisförmigen Vorsprung mit konischer Außenfläche aufweisen und daß der Vorsprung der Anpreßscheiben und die Ausnehmung in den Wulstformwerkzeugen segmentartig angeordnet und jeweils durch Rillen in den Anpreßscheiben bzw. erhöhte Vorsprünge in den Wulstformwerkzeugen unterbrochen sind.

Die Gegenwerkzeuge sind auf zwei Anpreßscheiben reduziert, die in einfacher Weise an teleskopierbaren Stempeln befestigt sein können. Gelenke sind nicht vorhanden, so daß die Störanfälligkeit der Reifenheizpresse insgesamt deutlich gesenkt und die Betriebsbereitschaft entsprechend erhöht ist. Die kreisringförmige Anpreßfläche weist keine Unterbrechungen an ihrem Umfang auf und gibt dadurch keinen Anlaß zu Unregelmäßigkeiten an der Innenseite der Wulste. Insbesondere ermöglicht die nicht unterbrochene, kreisringförmige Anpreßfläche eine gute Abdichtung. Die konische Fläche des Vorsprungs ermöglicht eine gute Vorzentrierung bei der Ablage des Reifenrohlings auf dem oberen Anpreßring und in Zusammenhang mit der Kontur des Wulstformwerkzeugs eine exakte Zentrierung vor dem endgültigen Einspannen. Durch die segmentartige Unterteilung des Vorsprungs der Anpreßscheiben und die abwechselnde Anordnung von Rillen können Vorsprünge der Wulstformwerkzeuge in die Anpreßscheiben eindringen. Bei einer konischen Ausbildung eines Teils der Kontur der Wulstformwerkzeuge ergibt sich bei der Anordnung von Vorsprüngen ein kleinerer Enddurchmesser der konischen Fläche, was eine bessere Erfassung des Wulstes beim Anlegen an das Wulstformwerkzeug ermöglicht und damit zu einer sicheren Zentrierung des Wulstes vor dem Einspannen führt. Aus DE-B-1124 674 ist zwar bereits eine balglose Reifenheizpresse gemäß dem Oberbegriff des Patentanspruchs bekannt. Hier ist jedoch die Mittenlage des Reifenrohlings im wesentlichen von dessen exakter Auflage auf der unteren Aufnahme abhängig. Im Gegensatz dazu wird mit der vorliegenden Erfindung eine genaue Zentrierung beider Reifenwulste sowohl bezüglich der Anpreßscheiben und der Wulstformwerkzeuge als auch dieser beiden Bauteile jeweils untereinander erreicht, und zwar über einen wegen deren Gestaltung mit Vorsprüngen und entsprechenden Ausnehmungen wesentlich verlängerten Zentrierweg.

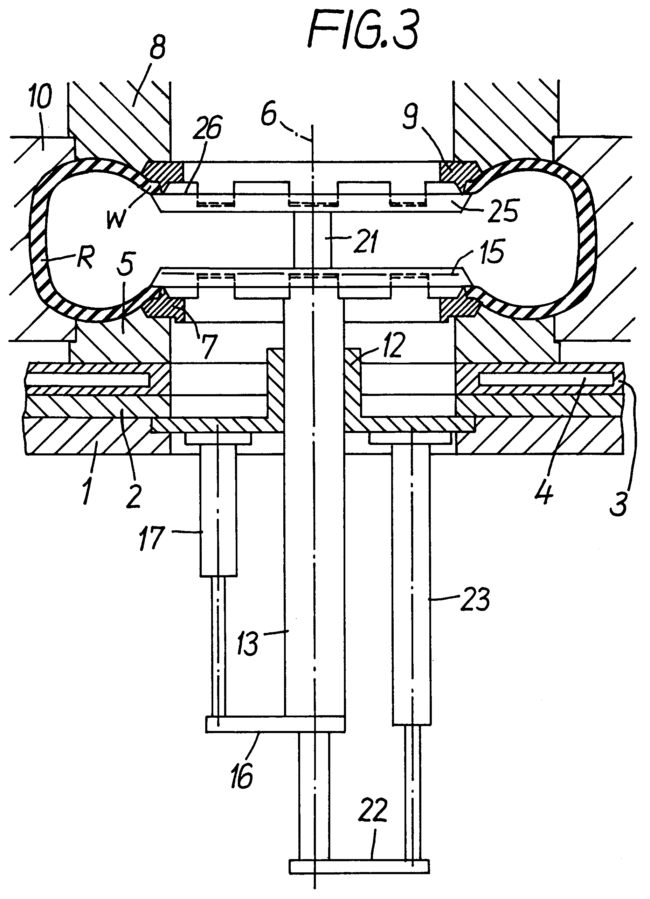

Ein Ausführungsbeispiel der Erfindung ist in der Zeichnung dargestellt und wird im folgenden näher beschrieben. Es zeigen
- Fig. 1 bis 3: eine Reifenheizpresse mit ihren wesentlichen Teilen im Querschnitt in der Beschickungsstellung, in der Vorzentrierstellung und in der Heiz- bzw. Vulkanisierstellung.
- Fg. 4: die obere Anpreßscheibe in der Draufsicht.

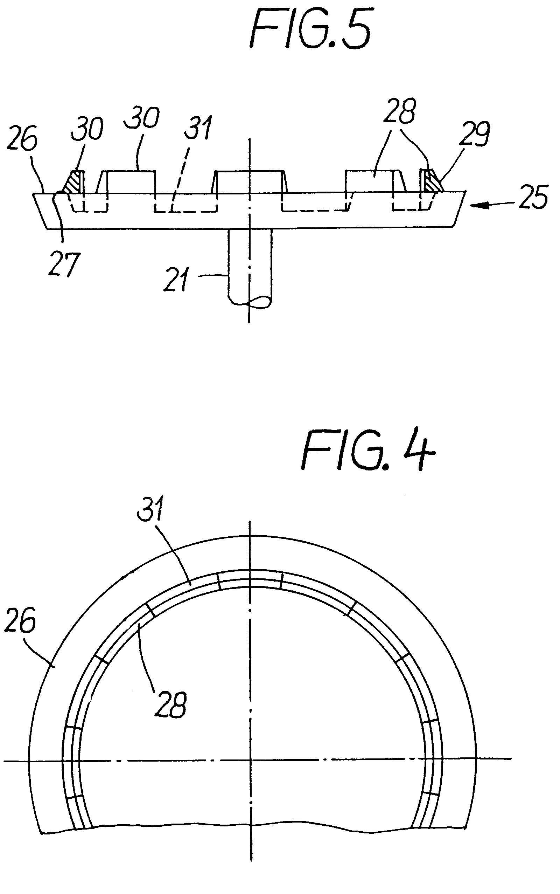

- Fig. 5: die obere Anpreßscheibe in einer teilweise geschnittenen Seitenansicht,

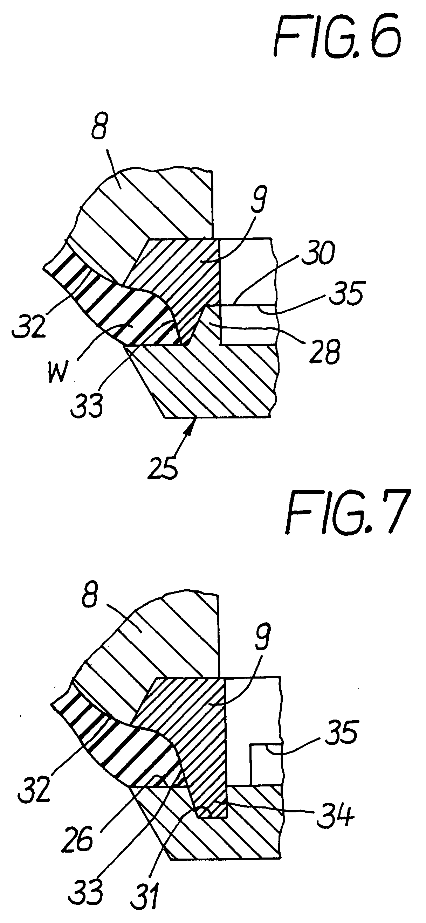

- Fig. 6: die obere Anpreßscheibe und das obere Wulstformwerkzeug in einem auszugsweisen Querschnitt durch eine Stelle mit einem am Anpreßring befindlichen Vorsprung und
- Fig. 7: einen auszugsweisen Querschnitt an einer Stelle mit einer Rille in der Anpreßscheibe.

Auf einem Pressentisch 1 der Reifenheizpresse ist eine Wärmeisolierplatte 2 und darauf eine Heizplatte 3 mit Kanälen 4 zum Durchströmen von Heizmedium angeordnet.

Zur Aufnahme eines Reifenrohlings R ist auf der Heizplatte 3 eine untere, ringförmige Formschale 5 fest angeordnet, die zur Achse 6 der Reifenheizpresse einen unteren Wulstformring oder kurz Wulstring 7 trägt. Eine entsprechende obere Formschale 8 und ein entsprechender oberer Wulstring 9 befinden sich im oberen Teil der Reifenheizpresse. Sie sind in bekannter Weise mit nicht dargestellten Hubmitteln heb- und senkbar. Zu den Pressenwerkzeugen gehören weiterhin die radial anstellbaren segmentartigen Profilformwerkzeuge 10.

Im Pressentisch 1 ist ferner eine Führung 12 gelagert, in der ein rohrförmiger Stempel 13 gleitbar geführt ist. An diesem Stempel befindet sich oben eine untere Anpreßscheibe 15. Der Stempel 13 und mit ihm die untere Anpreßscheibe 15 werden über eine Traverse 16 von einem Hydraulikzylinder 17 bewegt. Die untere Anpreßscheibe 15 weist einen nach unten gerichteten Anschlußstutzen 18 auf, der über eine Schlauchverbindung 19 zu einer (nicht dargestellten) Quelle eines Heizmediums verbunden ist.

Innerhalb des rohrförmigen Stempels 13 ist ein zylindrischer Stempel 21 gleitbar geführt, der über eine Traverse 22 von einem Hydraulikzylinder 23 bewegt wird. An seinem oberen Ende ist eine obere Anpreßscheibe 25 angeordnet. Der oberen Anpreßscheibe 25 ist der obere Wulstring 9 zugeordnet. Die obere Anpreßscheibe 25 weist an ihrem Umfang eine ringförmige Angpreßfläche 26 auf, die der Innenfläche des oberen Reifenwulstes W angepaßt und zur Aufnahme des Reifenwulstrohlings und zum Anpressen des Reifenwulsts W an den oberen Wulstring 7 beim Vulkanisiervorgang vorgesehen ist.

Die Anpreßfläche 26, und damit die Anpreßscheibe 25 bzw. 15 insgesamt, hat einen Außendurchmesser, der größer ist als der Innendurchmesser des Reifenwulstes W.

An dem nach innen, d.h. zur Achse 6 der Reifenheizpresse gerichteten Rand 27 der Anpreßfläche 26 befinden sich n, z.B. acht, in der Draufsicht gesehen, kreisringförmige, erhabene Nasen oder Vorsprünge 28, die - in Umfangsrichtung gesehen - jeweils 1/2n der Umfangslänge ausmachen. Die Vorsprünge 28 haben eine konische äußere Fläche 29 und eine parallel zur Anpreßfläche 26 verlaufende Anlagefläche 30. Zwischen den Vorsprüngen 28 sind in der oberen Anpreßscheibe 25 Rillen oder Nuten 31 angeordnet.

Der obere Wulstring 9 hat außen eine der Außenkontur des Reifenwulsts W angepaßte Formfläche 32 mit einer nach unten weisenden konischen Fläche 33. Jeweils über 1/2n der Umfangslänge ist die konische Fläche 33 in nach unten gerichtete Vorsprünge 34 verlängert bzw. erhöht, die in die entsprechend ausgebildeten Rillen 31 der Anpreßscheibe 25 eingreifen. Zwischen den Vorsprüngen 34 weist der Wulstring 9 Taschen oder Ausnehmungen 35 auf, in die die Vorsprünge 28 der Anpreßscheibe 25 eingreifen. Dabei liegt die Auflagefläche 30 der Vorsprünge 28 an einer entsprechenden Anlagefläche der Ausnehmungen 35 des Wulstrings 9 an.

Die obere und untere Anpreßscheibe 25, 15 und der obere und untere Wulstring 9, 7 sind jeweils gleich ausgebildet.

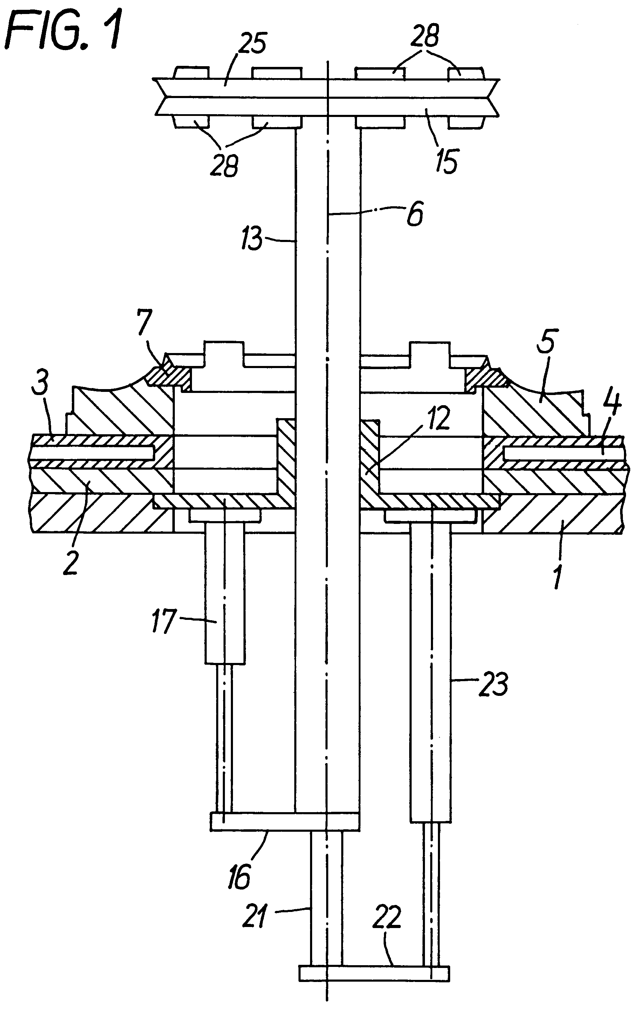

Nachfolgend wird die Funktionsweise der Reifenheizpresse erläutert. Zum Beschicken eines Reifenrohlings R werden die obere Formschale 8 mit dem oberen Wulstring 9 axial nach oben und die Profilformwerkzeuge 10 radial nach außen gefahren. Die beiden Anpreßscheiben 15, 25 werden in eine mittlere Höhe zwischen den auseinandergefahrenen äußeren Formwerkzeugen 5, 7 und 8, 9 gefahren und dabei unmittelbar aneinanderliegend gehalten (vgl. Fig. 1).

In dieser Position wird der Reifenrohling R durch ovales Strecken insbesondere des unteren Wulstes über die Anpreßscheiben 15, 25 geschoben (sogen. Überknöpfen) und durch Drehen des Reifenrohlings mit dem oberen Wulst auf der oberen Anpreßscheibe 25 abgelegt, wie dies beispielsweise in der älteren DE-Patentanmeldung P 39 18 209.6 offenbart ist. Dabei dienen die Vorsprünge 28 mit ihren äußeren konischen Flächen 29 zum Vorzentrieren und die ringförmige Anpreßfläche 26 zur ersten Ablage des Reifenrohlings R.

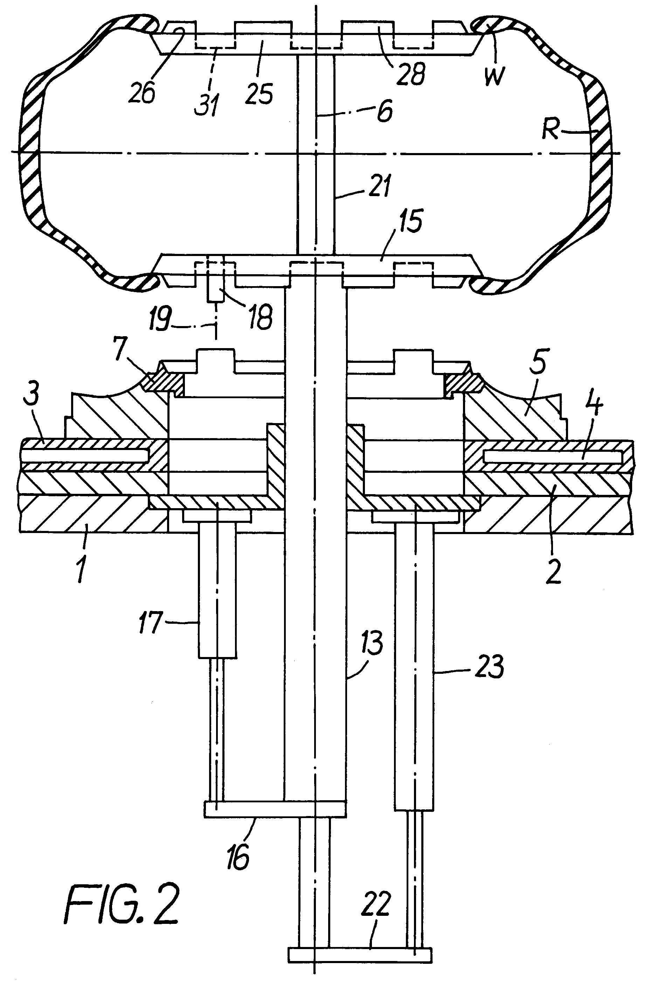

Anschließend wird die untere Anpreßscheibe 15 in die in Fig. 2 dargestellte Position gefahren, in der der Reifenrohling eine leichte Vorspannung erhält und so auch der untere Wulst entsprechend vorzentriert wird.

Beide Anpreßscheiben 15, 25 werden unter Beibehalt ihres gegenseitigen Abstands nach unten gefahren bis die Vorsprünge 28 der unteren Anpreßscheibe 15 mit ihrer Auflagefläche 30 auf den Grund der Ausnehmungen 35 im Wulstring 7 auffahren und die Vorsprünge 34 des Wulstrings in die Rillen 31 der Anspreßscheibe 15 eintauchen. Dabei wird der Wulst W des Reifenrohlings R in seine endgültige Form gedrückt und eine gute Dichtung zwischen der Wulstpartie des Reifenrohlings und dem Wulstring 7 erreicht.

Durch die gegensinnig schrägen Flächen 29 bzw. 33 der Vorsprünge 28 der Anpreßscheibe 15 und des Wulstringes 7 wird der Reifenwulst W vor dem endgültigen Zusammenpressen in eine exakt zentrierte Position gebracht.

Durch die schrägen Flächen 29, 33 der oberen Anpreßscheibe 25 und des Wulstrings 9 wird der obere Wulst in gleicher Weise exakt zentriert und eingespannt. Weiterhin werden die Profilformwerkzeuge 10 radial nach innen gefahren. Vorteilhafterweise wird das Einspannen der Wulstpartien durch die oberen und unteren Anpreßscheiben 25, 15 und die Wulstringe 9, 7 gleichzeitig vorgenommen.

## Patentansprüche

1. Balglose Reifenheizpresse mit einem oberen und einem unteren äußeren Wulstformwerkzeug und den jeweiligen Reifenwulst in der Heizposition gegen das entsprechende Wulstformwerkzeug pressenden Gegenwerkzeugen, die als obere bzw. untere Anpreßscheibe (25, 15) ausgebildet sind, die
- ungabhängig voneinander axial bewegbar sind,
- einen Außendurchmesser aufweisen, der größer ist als der Innendurchmesser des Reifenwulstes (W), des Reifenrohlings (R) und
- jeweils eine dem zugeordneten Wulstformwerkzeug (9, 7) zugewandte, ringförmige Anpreßfläche (26) aufweisen,
**dadurch gekennzeichnet**, daß die Anpreßscheiben (25, 15) zur Anlage in einer Ausnehmung (35) des entsprechenden äußeren Wulstformwerkzeugs (9, 7) einen die Anpreßfläche (26) begrenzenden - in der Draufsicht gesehen - kreisringförmigen Vorsprung (28) mit konischer Außenfläche (29) aufweisen und daß der Vorsprung (28) der Anpreßscheiben (25, 15) und die Ausnehmung (35) in den Wulstformwerkzeugen (9 7) segmentartig angeordnet und jeweils durch Rillen (31) in den Anpreßscheiben (25, 15) bzw. erhöhte Vorsprünge (34) in den Wulstformwerkzeugen (9, 7) unterbrochen sind.

## Claims

1. Bladderless vulcanising press for tyres with an upper and a lower outer bead form tool and mating tools pressing the respective tyre bead in the vulcanising position against the corresponding bead form tool, said mating tools being constructed as upper or lower pressure discs (25, 15), which
- are movable axially independently of one another,
- have an outside diameter which is greater than the inside diameter of the tyre bead (W), of the tyre blank (R), and
- respectively have a ring-shaped pressure surface (26) facing the allocated bead form tool (9, 7),
characterised in that for abutment in a recess (35) of the corresponding outer bead form tool (9, 7), the pressure discs (25, 15) have a projection (28), which defines the pressure surface (26), is circular in top view and has a conical outer surface (29), and that the projection (28) of the pressure discs (25, 15) and the recess (35) in the bead form tools (9, 7) are arranged in a segment-like arrangement and are respectively interrupted by grooves (31) in the pressure discs (25, 15) or by raised projections (34) in the bead form tools (9, 7).

## Revendications

1. Presse de vulcanisation pour pneumatiques, sans sac gonflable, comportant un outil supérieur externe et un outil inférieur externe de moulage de talon, et des contre-outils qui, en position de chauffage, pressent le talon considéré du pneumatique contre l'outil de moulage de talon correspondant, ces contre-outils étant réalisés respectivement sous la forme de disques de pressage (25, 15), respectivement supérieur et inférieur, qui
- sont mobiles axialement, indépendamment l'un de l'autre,
- présentent un diamètre extérieur plus grand que le diamètre intérieur du talon du pneu (W), et
- présentent chacun une surface de pressage annulaire (26) tournée vers l'outil de moulage de talon (9, 7) associé,
caractérisé
- en ce que les disques de pressage (25, 15) présentent, pour leur contact dans un évidement (35) de l'outil de moulage de talon (9, 7) associé, une saillie (28) en forme d'anneau circulaire limitant - en vue de dessus - la surface de pressage (26), et comportant des surfaces extérieures coniques (29), et
- en ce que la saillie (28) des disques de pressage (25, 15) et l'évidement (35) dans les outils de moulage du talon (9, 7) sont disposés sous la forme de segments et sont interrompus chacun par des cannelures (31) dans les disques de pressage (25, 15), et respectivement par des saillies (34) en surélévation, dans les outils de moulage du talon (9, 7).
